# EUROPEAN PATENT SPECIFICATION

(11) **EP 0 772 392 B1**
(45) Date of publication and mention of the grant of the patent: **16.09.1998**
(21) Application number: 95923517.7
(22) Date of filing: 06.07.1995
(51) Int. Cl.: A01N 25/04, A01N 25/34, A01N 57/20, A01N 43/90, A01N 43/40

(54) **CONTAINERISATION SYSTEM COMPRISING A WATER DISPERSIBLE GEL**
VERPACKUNGSSYSTEM, DAS EIN WASSERDISPERGIERBARES GEL ENTHÄLT
SYSTEME D'EMBALLAGE CONTENANT UN GEL DISPERSIBLE DANS L'EAU

(30) Priority: 28.07.1994 GB 9415290
(43) Date of publication of application: 14.05.1997
(73) Proprietor: ZENECA LIMITED, London W1Y 6LN (GB)
(72) Inventor: TADROS, Tharwat, Fouad, Wokingham Berkshire RG11 4HE (GB); TAYLOR, Philip, Maidenhead Berkshire SL6 7JD (GB)
(74) Representative: Tierney, Francis John
(86) International application number: PCT/GB95/01605
(87) International publication number: WO 96/03038

(56) References cited:
- EP-A- 0 518 689
- WO-A-87/02864
- WO-A-88/06888
- WO-A-92/01377
- BE-A- 649 320
- DE-A- 2 411 727
- DE-B- 1 197 272
- US-A- 5 143 536
- B.ELVERS ET AL. 'Ullman's Encyclopedia of Industrial Chemistry Vol. A21' 1992 , VCH , WEINHEIM, DE pages 143-156: 'Polyacrylamides and Poly(Acrylic Acids) see page 143 see page 151 - page 152

## Description

The present invention relates to a containerisation system comprising a water dispersible agrochemical gel formulation contained in a water-soluble or water dispersible bag.

Gels comprising a surfactant, an agrochemical, an acrylic acid polymer or copolymer and water are disclosed in WO92/01377. Formulations for aerial spraying are disclosed in DE-B-1197272, rooting compositions are disclosed in US5143536, herbicide compositions comprising a mixture of a water-soluble herbicide and a water-insoluble herbicide are disclosed in BE-649320, compositions designed to be dispensed from an aerosol are disclosed in DE2411727, topical pharmaceutical formulations comprising metronidazole are disclosed in WO 88/06888 and contradeglutitious solid herbicidal compositions are disclosed in WO 87/02864. Polyacrylamides and polyacrylic acids are discussed in Ullmann's Encyclopedia of Industrial Chemistry (1992, 5th edition, volume 21A, p143-156). New containerisation systems and aqueous formulations are disclosed in EP-A1-0518689.

The present invention provides a containerisation system comprising a water dispersible gel contained in a water-soluble or water dispersible bag; the water dispersible gel comprising:
(a) 1-60% by weight of an ionic, water-soluble agrochemical;
(b) 1-4% by weight of a crosslinked polyacrylic acid;
(c) 30-80% by weight of water; and,
(d) 2-20% by weight of a base.

The gels comprised in the containerisation system of the present invention are able to be dispersed in water, and the rate of dispersion depends on the degree agitation the gel water mixture is subjected to and also the amount of water present.

The ionic, water soluble agrochemical, is, for example, a herbicide (such as a paraquat salt (for example paraquat dichloride or paraquat bis(methylsulphate), a diquat salt (for example diquat dibromide or diquat alginate) or glyphosate or a salt or ester thereof (such as glyphosate isopropylammonium, glyphosate sesquisodium or glyphosate trimesium (also known as sulfosate)), an insecticide or a fungicide. It is preferred that the ionic, water soluble agrochemical is paraquat dichloride, diquat dibromide, glyphosate isopropylammonium or glyphosate trimesium (also known as sulfosate).

Crosslinked polyacrylic acids preferably have a molecular weight in the range 5x10⁵ to 5x10⁶, especially in the range 1x10⁶ to 4x10⁶. They are available commercially, for example as CARBOPOLs marketed by B F Goodrich (such as CARBOPOLs 5984, 2984, 940, 5984, 910, 941, 934, 934P or ETD 2050).

Suitable bases include ammonium or alkali metal (such as sodium or potassium) hydroxides, carbonates or bicarbonates (for example sodium hydroxide, sodium carbonate or sodium bicarbonate); or amines of formula R¹R²R³N (wherein R¹, R² and R³ are, independently, hydrogen or C₁₋₆ alkyl [optionally substituted by C₁₋₆ alkoxy, hydroxy, halogen, C₁₋₆ haloalkoxy (such as OCF₃), C₁₋₆ hydroxyalkoxy (such as HOCH₂CH₂O) or C₁₋₄ alkoxy(C₁₋₆)alkoxy (such as CH₃O(CH₂)₂O or CH₃O(CH₂)₅0] such as HOCH₂CH₂). It is preferred that R¹, R² and R³ are, independently, C₁₋₆ alkyl or C₁₋₆ alkyl monosubstituted with hydroxy. An amine of formula R¹R²R³N is, for example, triethylamine or triethanolamine.

Alkyl and the alkyl part of alkoxy groups is straight or branched chain and preferably contains from 1 to 4 carbon atoms. It is, for example, methyl, ethyl, n-propyl, iso-propyl, n-butyl or tert-butyl.

In one aspect the present invention provides a containerisation system wherein the water dispersible gel comprises 5-60% by weight of an ionic, water soluble agrochemical.

In another aspect the present invention provides a containerisation system wherein the water dispersible gel comprises (a) 20-60% by weight of an ionic, water soluble agrochemical, (b) 1-4% by weight of a crosslinked polyacrylic acid, (c) 30-80% by weight of water, and (d) 2-20% by weight of a base.

In a further aspect the present invention provides a containerisation system wherein the water dispersible gel comprises (a) 20-60% by weight of an ionic, water soluble agrochemical, (b) 1-4% by weight of a crosslinked polyacrylic acid, (c) 30-80% by weight of water, (d) 2-20% by weight of a base, and (e) 1-40% of an electrolyte.

When the ionic strength of the water dispersible gel is low it is preferred that said gel comprises a suitable electrolyte in addition to the ionic agrochemical present. The electrolyte helps to improve the insolubility of the material from which the sachet is made in the gel. (See Polyvinyl Alcohol - Properties and Applications pages 38-43, edited by C. A. Finch, published by J Wiley & Sons in 1973 and EP-A1-0518689.) Suitable electrolytes may, for example, comprise a cation or mixtures of cations selected from the list comprising: ammonium, copper, iron, potassium and sodium; and an anion or mixture of anions selected from the list comprising: sulphate, nitrate, fluoride, chloride, bromide, iodide, acetate, tartrate, ammonium tartrate, benzenesulphonate, benzoate, bicarbonate, carbonate, bisulphate, bisulphite, sulphate, sulphite, borate, borotartrate, bromate, butyrate, chlorate, camphorate, chlorite, cinnamate, citrate, disilicate, dithionate, ethylsulphate, ferricyanide, ferrocyanide, fluorosilicate, formate, glycerophosphate, hydrogenphosphate, hydroxostannate, hypochlorite, hyponitrite, hypophosphite, iodate, isobutyrate, lactate, laurate, metaborate, metasilicate, methionate, methylsulphate, nitrite, oleate, orthophosphate, orthophosphite, orthosilicate, oxalate, perborate, perchlorate, phosphate, polyfluoride, polychloride, polyiodide, polybromide, polysulphide, polysulphate, polysulphite, salicylate, silicate, sorbate, stannate, stearate, succinate or valerate. Preferred electrolytes are ammonium sulphate, sodium sulphate, potassium sulphate, copper sulphate, ammonium nitrate, sodium nitrate, potassium nitrate, sodium chloride or potassium chloride.

It is preferred that the pH of the water dispersible gel is in the range 6 to 10, especially 6 to 8, particularly 6 to 7.

In a further aspect the present invention provides a containerisation system wherein the water dispersible gel comprises 2-5% by weight of an alkali metal hydroxide, carbonate or bicarbonate.

A Bohlin VOR rheometer may be used to measure the elasticity and viscosity of the water dispersible gel under low shear conditions. Here a sinusoidally varying strain (at a frequency of 1Hz) is applied to a sample of a formulation maintained at 25°C. The resultant stress, which also varies sinusoidally with time, is observed. The ratio of the maximum stress to the maximum strain is known as the complex modulus (G*). By using the phase shift, δ, between the stress and strain wave forms the complex modulus may be split into two components - the storage (elastic) modulus (G') and the loss (viscous) modulus (G''). The storage and loss moduli are a measure of the energy stored and the energy lost respectively, in an oscillatory cycle. The relative magnitude of the loss and storage moduli ($\text{G''/G' = Tan δ}$) provides information on the elasticity of the gel. The lower the value of $\text{Tan δ}$ the greater the degree of gelation. Similarly, gels are characterised by their non-Newtonian flow behaviour, exhibiting, for example, yield values and shear thinning. Yield values can be measured using a Haake Rotovisco RV20 under high shear conditions.

In a still further aspect the present invention provides a containerisation system comprising a water dispersible gel as hereinbefore described having a storage modulus (G') in the range 1-1000Pa, preferably 20-500Pa, more preferably in the range 100-200Pa.

In another aspect the present invention provides a containerisation system comprising a water dispersible gel as hereinbefore described having a $\text{tan δ}$ (ratio of loss modulus to storage modulus) of less than 1, preferably less than 0.5, more preferably less than 0.2, especially less than 0.1. (Rheological measurements are carried out at a temperature of 25°C. Oscillation measurements are carried out within the linear viscoelastic region as determined by strain sweep measurements made at a frequency of 1Hz (6.28 rad/s)).

In another aspect the present invention provides a containerisation system comprising a water dispersible gel itself comprising 10-20% by weight of a base of formula R¹R²R³N (wherein R¹, R² and R³ are as defined above).

In another aspect the present invention provides a containerisation system comprising a water dispersible gel itself comprising 1.5 to 3, especially 2 to 2.75 by weight of a crosslinked polyacrylic acid.

It is preferred that a plasticiser is included in the water dispersible gel. The plasticiser is preferably present in the range 0.1 to 1% (especially 0.3 to 0.75%) by weight. Suitable plasticisers include glycols (for example ethylene glycol), glycerine and dibutylphthalate.

Depending on the nature of the ionic, water soluble agrochemical present, one or more adjuvants or co-formulants (such as a wetter or anti-freezing agent) may also be comprised in the water dispersible gel. Adjuvants include a neutral or anionic surfactant [such as a soap, a salt of an aliphatic monoester of sulphuric acid (for example, sodium lauryl sulphate), a salt of a sulphonated aromatic compound (for example, sodium dodecylbenzenesulphonate, an alkyl glucoside or a polysaccharide].

In a further aspect the present invention provides a containerisation system comprising a water dispersible gel as defined above which also comprises a chelating or sequestering agent for calcium ions. A suitable chelating or sequestering agent is ethylenediaminetetraacetic acid.

Over and above the components already mentioned, the water dispersible gel may also comprise an adhesive, an antifoaming agent, a buffer, a deodorant, a dye, an emetic, a preservative, an odourant, a perfume, a safener, a further solvent, a stabiliser, a synergist, a thickener or a wetting agent.

The water dispersible gel can be made simply by initially mixing all the components other than the base, and then adding the base to form the gel. Thus it can be appreciated that the gel is made by a pH switching process.

The water-soluble or water dispersible bag can be made from a variety of materials and preferred materials are polyethylene oxide, methyl cellulose or, especially, polyvinylalcohol (PVA). The PVA is generally partially or fully alcoholysed or hydrolysed, for example 40-100%, especially 80-100%, alcoholysed or hydrolysed polyvinyl-acetate film. It is preferred that the PVA film is a laminate of two or more thicknesses of film, a surface modified film or a co-extruded film (such as is described in WO 94/29188).

In another aspect the containerisation system comprises a bag-in-bag arrangement comprising a water-soluble or water dispersible bag holding a water dispersible gel (as hereinbefore defined) and a second water-soluble or water dispersible bag also holding a water dispersible gel (as hereinbefore defined). This bag-in-bag arrangement can be used, for example, to contain a gel comprising an ionic, water soluble agrochemical in the inner bag and a gel comprising adjuvant, synergist or penetrating agent in the outer bag.

In a further aspect the containerisation system provides two water-soluble or water dispersible bags joined at a common seal, one containing a gel (as hereinbefore defined) comprising one ionic, water soluble agrochemical, the other bag containing a gel (as hereinbefore defined) comprising a different ionic, water soluble agrochemical.

In a still further aspect the containerisation system comprises a bag-in-bag arrangement comprising a first water-soluble or water dispersible bag holding a gel (as hereinbefore defined) and a second water-soluble or water dispersible bag surrounding the first water-soluble or water dispersible bag. The advantage of this system is that the second bag presents a barrier to any matter leaking from the first bag.

In another aspect the containerisation system comprises a bag-in-bag arrangement comprising a first water-soluble or water dispersible bag holding a gel (as hereinbefore defined) and a second water-soluble or water dispersible bag holding an agrochemical composition (such as a liquid, granule, powder or gel composition comprising a fungicide, herbicide, insecticide, adjuvant, synergist or penetrating agent).

In a further aspect the containerisation system comprises a bag-in-bag arrangement comprising a first water-soluble or water dispersible bag holding an agrochemical composition (such as a liquid, granule, powder or gel composition comprising a fungicide, herbicide, insecticide, adjuvant, synergist or penetrating agent) and a second water-soluble or water dispersible bag holding a gel (as hereinbefore defined).

In another aspect the containerisation system provides two water-soluble or water dispersible bags joined at a common seal, one containing a gel (as hereinbefore defined) comprising a fungicide, herbicide, insecticide, adjuvant, synergist or penetrating agent the other bag containing an agrochemical composition (such as a liquid, granule, powder or gel composition comprising a fungicide, herbicide, insecticide, adjuvant, synergist or penetrating agent).

The water-soluble or water dispersible sachet can be formed and filled using standard techniques (such as thermoforming or vertical form-fill-sealing).

In use the containerisation system of the present invention can be mixed with water to give a sprayable solution or dispersion of the ionic chemical. The containerisation system is especially useful in agriculture.

The following Examples illustrate the preparation of water dispersible gels that may be comprised in the containerisation system of the invention. CARBOPOL is a Trade Mark of B F Goodrich.

### EXAMPLE 1

A solution of sulfosate in water (61.4% w/w, 34.19g) was added to a 5% (w/w) aqueous solution of CARBOPOL 2984 (35.04g), and water (0.88g) and ethylene glycol (0.35g) were then added. The mixture was then shaken and left on rollers to ensure thorough mixing. Sodium hydroxide (2.48g) was then added to neutralize the acid and bring the pH of the system up to 6.45. This resulted in the CARBOPOL 2984 swelling.

### EXAMPLE 2

A solution of sulfosate in water (61.4% w/w, 34.16g) was added to a 5% (w/w) aqueous solution of CARBOPOL 2984 (21.00g), and water (14.89g) and ethylene glycol (0.36g) were then added. The mixture was then shaken and left on rollers to ensure thorough mixing. Sodium hydroxide (2.27g) was then added to neutralize the acid and bring the pH of the system up to 6.65. This resulted in the CARBOPOL 2984 swelling.

### EXAMPLE 3

A solution of sulfosate in water (61.4% w/w, 34.17g) was added to a 6% (w/w) aqueous solution of CARBOPOL 2984 (35.00g), and water (0.90g) and ethylene glycol (0.35g) were then added. The mixture was then shaken and left on rollers to ensure thorough mixing. Sodium hydroxide (2.48g) was then added to neutralize the acid and bring the pH of the system up to 6.23. This resulted in the CARBOPOL 2984 swelling.

### EXAMPLE 4

A solution of sulfosate in water (61.4% w/w, 34.18g) was added to a 5% (w/w) aqueous solution of CARBOPOL 2984 (24.50g), and water (11.36g) and ethylene glycol (0.35g) were then added. The mixture was then shaken and left on rollers to ensure thorough mixing. Sodium hydroxide (2.28g) was then added to neutralize the acid and bring the pH of the system up to 6.59. This resulted in the CARBOPOL 2984 swelling.

### EXAMPLE 5

A solution of sulfosate in water (61.4% w/w, 34.14g) was added to a 5% (w/w) aqueous solution of CARBOPOL 2984 (31.49g), and water (4.37g) and ethylene glycol (0.38g) were then added. The mixture was then shaken and left on rollers to ensure thorough mixing. Sodium hydroxide (2.39g) was then added to neutralize the acid and bring the pH of the system up to 6.35. This resulted in the CARBOPOL 2984 swelling.

### EXAMPLE 6

A solution of sulfosate in water (61.4% w/w, 39.81g) was added to a 5% (w/w) aqueous solution of CARBOPOL 2984 (17.51g), and water (12.77g) and ethylene glycol (0.35g) were then added. The mixture was then shaken and left on rollers to ensure thorough mixing. Sodium hydroxide (2.70g) was then added to neutralize the acid and bring the pH of the system up to 6.52. This resulted in the CARBOPOL 2984 swelling.

### EXAMPLE 7

A solution of sulfosate in water (61.4% w/w, 39.81g) was added to a 5% (w/w) aqueous solution of CARBOPOL 2984 (20.42g), and water (9.93g) and ethylene glycol (0.35g) were then added. The mixture was then shaken and left on rollers to ensure thorough mixing. Sodium hydroxide (2.80g) was then added to neutralize the acid and bring the pH of the system up to 6.48. This resulted in the CARBOPOL 2984 swelling.

### EXAMPLE 8

A solution of sulfosate in water (61.4% w/w, 39.80g) was added to a 5% (w/w) aqueous solution of CARBOPOL 2984 (23.34g), and water (6.95g) and ethylene glycol (0.35g) were then added. The mixture was then shaken and left on rollers to ensure thorough mixing. Sodium hydroxide (2.88g) was then added to neutralize the acid and bring the pH of the system up to 6.48. This resulted in the CARBOPOL 2984 swelling.

### EXAMPLE 9

A solution of sulfosate in water (61.4% w/w, 39.89g) was added to a 5% (w/w) aqueous solution of CARBOPOL 2984 (26.23g), and water (4.09g) and ethylene glycol (0.36g) were then added. The mixture was then shaken and left on rollers to ensure thorough mixing. Sodium hydroxide (2.81g) was then added to neutralize the acid and bring the pH of the system up to 6.38. This resulted in the CARBOPOL 2984 swelling.

### EXAMPLE 10

A solution of sulfosate in water (61.4% w/w, 39.78g) was added to a 5% (w/w) aqueous solution of CARBOPOL 2984 (29.17g), and water (1.10g) and ethylene glycol (0.36g) were then added. The mixture was then shaken and left on rollers to ensure thorough mixing. Sodium hydroxide (2.85g) was then added to neutralize the acid and bring the pH of the system up to 6.36. This resulted in the CARBOPOL 2984 swelling.

### EXAMPLE 11

A solution of sulfosate in water (61.4% w/w, 39.81g) was added to a 5% (w/w) aqueous solution of CARBOPOL 2984 (24.63g), and water (5.82g) and ethylene glycol (0.35g) were then added. The mixture was then shaken and left on rollers to ensure thorough mixing. Sodium hydroxide (2.82g) was then added to neutralize the acid and bring the pH of the system up to 6.23. This resulted in the CARBOPOL 2984 swelling.

### EXAMPLE 12

A solution of sulfosate in water (61.4% w/w, 39.79g) was added to a 5% (w/w) aqueous solution of CARBOPOL 2984 (22.56g), and water (7.79g) and ethylene glycol (0.35g) were then added. The mixture was then shaken and left on rollers to ensure thorough mixing. Sodium hydroxide (2.82g) was then added to neutralize the acid and bring the pH of the system up to 6.23. This resulted in the CARBOPOL 2984 swelling.

### EXAMPLE 13

CARBOPOL 2984 (2.12g) was mixed with a solution of sulfosate in water (61.4% w/w, 45.50g) after which and water (12.34g) and ethylene glycol (0.34g) were added. The mixture was shaken and left on rollers to ensure thorough mixing. Triethanolamine (10.01g) was then added to neutralize the acid and bring the pH of the system up to 6.66. This resulted in the CARBOPOL 2984 swelling.

### EXAMPLE 14

CARBOPOL 2984 (1.94g) was mixed with a solution of sulfosate in water (61.4% w/w, 45.51g) after which water (12.57g) and ethylene glycol (0.35g) were added. The mixture was shaken and left on rollers to ensure thorough mixing. Triethanolamine (10.01g) was added to neutralize the acid and bring the pH of the system up to 6.71. This resulted in the CARBOPOL 2984 swelling.

### EXAMPLE 15

CARBOPOL 2984 (1.75g) was mixed with a solution of sulfosate in water (61.4% w/w, 45.58g) after which water (12.89g) and ethylene glycol (0.35g) were added. The mixture was shaken and left on rollers to ensure thorough mixing. Triethanolamine (10.05g) were added to neutralize the acid and bring the pH of the system up to 6.81. This resulted in the CARBOPOL 2984 swelling.

### EXAMPLE 16

CARBOPOL 2984 (1.41g) was mixed with a solution of sulfosate in water (61.4% w/w, 45.53g) after which water (13.12g) and ethylene glycol (0.35g) were added. The mixture was shaken and left on rollers to ensure thorough mixing. Triethanolamine (10.05g) was added to neutralize the acid and bring the pH of the system up to 6.81. This resulted in the CARBOPOL 2984 swelling.

### EXAMPLE 17

CARBOPOL 2984 (1.58g) was mixed with a solution of sulfosate in water (61.4% w/w, 45.55g) after which water (13.07g) and ethylene glycol (0.34g) were added. The mixture was shaken and left on rollers to ensure thorough mixing. Triethanolamine (10.05g) was added to neutralize the acid and bring the pH of the system up to 6.78. This resulted in the CARBOPOL 2984 swelling.

### EXAMPLE 18

CARBOPOL 2984 (1.23g) was mixed with a solution of sulfosate in water (61.4% w/w, 45.67g) after which water (13.22g) and ethylene glycol (0.36g) were added. The mixture was shaken and left on rollers to ensure thorough mixing. Triethanolamine (10.08g) was added to neutralize the acid and bring the pH of the system up to 6.87. This resulted in the CARBOPOL 2984 swelling.

### EXAMPLE 19

CARBOPOL 2984 (1.05g) was mixed with a solution of sulfosate in water (61.4% w/w, 45.62g) after which water (13.43g) and ethylene glycol (0.37g) were added. The mixture was shaken and left on rollers to ensure thorough mixing. Triethanolamine (10.13g) was added to neutralize the acid and bring the pH of the system up to 6.93. This resulted in the CARBOPOL 2984 swelling.

### EXAMPLE 20

A solution of sulfosate in water (61.4% w/w, 40.02g) was added to a 6% (w/w) aqueous solution of CARBOPOL 2984 (26.23g), and water (20.00g) was then added. The mixture was then shaken and left on rollers to ensure thorough mixing. Sodium hydroxide (2.77g) was then added to neutralize the acid and bring the pH of the system up to 6.49. This resulted in the CARBOPOL 2984 swelling.

### EXAMPLE 21

A solution of sulfosate in water (61.4% w/w, 40.02g) was added to a 6% (w/w) aqueous solution of CARBOPOL 2984 (26.67g), and water (13.33g) was then added. The mixture was then shaken and left on rollers to ensure thorough mixing. Sodium hydroxide (2.99g) was then added to neutralize the acid and bring the pH of the system up to 6.47. This resulted in the CARBOPOL 2984 swelling.

### EXAMPLE 22

A solution of sulfosate in water (61.4% w/w, 40.07g) was added to a 6% (w/w) aqueous solution of CARBOPOL 2984 (30.00g), and water (10.00g) was then added. The mixture was then shaken and left on rollers to ensure thorough mixing. Sodium hydroxide (2.97g) was then added to neutralize the acid and bring the pH of the system up to 6.40. This resulted in the CARBOPOL 2984 swelling.

### EXAMPLE 23

A solution of sulfosate in water (61.4% w/w, 40.02g) was added to a 6% (w/w) aqueous solution of CARBOPOL 2984 (33.34g), and water (6.68g) was then added. The mixture was then shaken and left on rollers to ensure thorough mixing. Sodium hydroxide (3.59g) was then added to neutralize the acid and bring the pH of the system up to 6.86. This resulted in the CARBOPOL 2984 swelling.

### EXAMPLE 24

A solution of sulfosate in water (61.4% w/w, 250.14g) was added to a mixture of a 4.7% (w/w) aqueous solution of CARBOPOL 2984 (33.34g) and ethylene glycol (1.27g). The mixture was then shaken and left on rollers to ensure thorough mixing. Sodium hydroxide (15.51g) was then added to neutralize the acid and bring the pH of the system up to 6.28. This resulted in the CARBOPOL 2984 swelling.

A sample of the gel formed (25g) was placed into a sachet made of polyvinylalcohol (Chris Craft M7030) and the sachet's opening was heat sealed. After storage at 25°C for 3 months the sachet remained supple and, when put in contact with water, the sachet and its contents readily dispersed.

### EXAMPLE 25

A solution of sulfosate in water (61.4%, 20.02g) was added to a 6.25% (w/w) aqueous solution of CARBOPOL 941 (15.02g) and water (5.00g). The mixture was then shaken and left on rollers to ensure thorough mixing. Sodium hydroxide (1.68g) was then added to neutralize the acid and bring the pH up to 6.57. This resulted in the CARBOPOL 941 swelling.

### EXAMPLE 26

A solution of sulfosate in water (61.4%, 20.06g) was added to a 6.22% (w/w) aqueous solution of CARBOPOL 910 (15.02g) and water (5.14g). The mixture was then shaken and left on rollers to ensure thorough mixing. Sodium hydroxide (1.53g) was then added to neutralize the acid and bring the pH up to 6.44. This resulted in the CARBOPOL 910 swelling.

### EXAMPLE 27

A solution of sulfosate in water (61.4%, 26.04g) was added to a 6.18% (w/w) aqueous solution of CARBOPOL 2984 (30.02g) and water (24.06g). The mixture was then shaken and left on rollers to ensure thorough mixing. Sodium hydroxide (3.11g) was then added to neutralize the acid and bring the pH up to 6.72. This resulted in the CARBOPOL 2984 swelling.

### EXAMPLE 28

A solution of sulfosate in water (61.4%, 32.50g) was added to a 6.17% (w/w) aqueous solution of CARBOPOL 2984 (30.00g) and water (17.52g). The mixture was then shaken and left on rollers to ensure thorough mixing. Sodium hydroxide (3.01g) was then added to neutralize the acid and bring the pH up to 6.57. This resulted in the CARBOPOL 2984 swelling.

### EXAMPLE 29

A solution of sulfosate in water (61.4%, 45.55g) was added to a 6.17% (w/w) aqueous solution of CARBOPOL 2984 (30.00g) and water (4.50g). The mixture was then shaken and left on rollers to ensure thorough mixing. Sodium hydroxide (3.16g) was then added to neutralize the acid and bring the pH up to 6.51. This resulted in the CARBOPOL 2984 swelling.

### EXAMPLE 30

A solution of sulfosate in water (61.4%, 40.09g) was added to a 5.99% (w/w) aqueous solution of CARBOPOL 2984 (30.00g) and water (10.00g). The mixture was then shaken and left on rollers to ensure thorough mixing. Sodium bicarbonate (6.45g) was then added to neutralize the acid and bring the pH up to 6.66. This resulted in the CARBOPOL 2984 swelling.

### EXAMPLE 31

A solution of sulfosate in water (61.4%, 39.99g) was added to a 6.18% (w/w) aqueous solution of CARBOPOL 2984 (30.00g) and water (10.02g). The mixture was then shaken and left on rollers to ensure thorough mixing. Sodium carbonate (4.80g) was then added to neutralize the acid and bring the pH up to 6.59. This resulted in the CARBOPOL 2984 swelling.

### EXAMPLE 32

A solution of sulfosate in water (61.4%, 40.00g) was added to a 6.15% (w/w) aqueous solution of CARBOPOL 5984 (30.00g) and water (10.50g). The mixture was then shaken and left on rollers to ensure thorough mixing. Sodium hydroxide (3.03g) was then added to neutralize the acid and bring the pH up to 6.55. This resulted in the CARBOPOL 5984 swelling.

### EXAMPLE 33

A solution of sulfosate in water (61.4%, 20.00g) was added to a 6.19% (w/w) aqueous solution of CARBOPOL ETD 2050 (16.68g) and water (3.44g). The mixture was then shaken and left on rollers to ensure thorough mixing. Sodium hydroxide (1.71g) was then added to neutralize the acid and bring the pH up to 6.71. This resulted in the CARBOPOL ETD 2050 swelling.

### EXAMPLE 34

A solution of glyphosate isopropylammonium in water (61.5%, 20.21g) was added to a (w/w) aqueous solution of 6.17% CARBOPOL 2984 (15.00g) and water (5.01g). The mixture was then shaken and left on rollers to ensure thorough mixing. Sodium hydroxide (2.86g) was then added to neutralize the acid and bring the pH up to 6.49. This resulted in the CARBOPOL 2984 swelling.

### EXAMPLE 35

A solution of diquat dibromide in water (26.3% w/v, 32.50g) was added to a 6.09% (w/w) aqueous solution of CARBOPOL 2984 (11.67g) and water (8.35g). The mixture was then shaken and left on rollers to ensure thorough mixing. Sodium hydroxide (0.30g) and a 40% aqueous solution of sodium hydroxide in water (0.14g) were then added to neutralize the acid and bring the pH up to 6.42. This resulted in the CARBOPOL 2984 swelling.

### EXAMPLE 36

A solution of paraquat dichloride in water (32.3% w/w, 20.01g) was added to a 6.10% (w/w) aqueous solution of CARBOPOL 2984 (11.68g) and water (8.45g). The mixture was then shaken and left on rollers to ensure thorough mixing. Sodium hydroxide (0.24g) and a 40% aqueous solution of sodium hydroxide (0.16g) were then added to neutralize the acid and bring the pH up to 6.57. This resulted in the CARBOPOL 2984 swelling.

### EXAMPLE 37

A solution of paraquat dichloride in water (32.3% w/w, 25.01g) was added to a 6.10% (w/w) aqueous solution of CARBOPOL 2984 (15.00g). The mixture was then shaken and left on rollers to ensure thorough mixing. Sodium hydroxide (0.37g) and a 40% aqueous solution of sodium hydroxide (0.10g) were then added to neutralize the acid. This resulted in the CARBOPOL 2984 swelling.

### EXAMPLE 38

A solution of paraquat dichloride in water (32.3% w/w, 20.02g) was added to a 6.13% (w/w) aqueous solution of CARBOPOL 2984 (17.50g), sodium chloride (1.00g) and water (2.38g). The mixture was then shaken and left on rollers to ensure thorough mixing. Sodium hydroxide (0.45g) was then added to neutralize the acid. This resulted in the CARBOPOL 2984 swelling.

### EXAMPLE 39

A solution of sulfosate in water (61.4%, 20.05g) was added to a 6.10% (w/w) aqueous solution of CARBOPOL 2984 (15.03g) and water (1.02g). The mixture was then shaken and left on rollers to ensure thorough mixing. Triethylamine (4.04g) was then added to neutralize the acid and raise the pH up to 7.29. This resulted in the CARBOPOL 2984 swelling.

### EXAMPLE 40

A solution of sulfosate in water (57.6% w/w, 30.41g) was added to a 6.55% (w/w) aqueous solution of CARBOPOL 2984 (22.03g), and water (6.57g) and ethylenediaminetetraacetic acid (1.51g) were then added. The mixture was then shaken and left on rollers to ensure thorough mixing. Sodium hydroxide (2.29g) was then added to bring the pH of the system up to 6.16. This resulted in the CARBOPOL 2984 swelling.

### EXAMPLE 41

A solution of sulfosate in water (57.6% w/w, 30.35g) was added to a 6.55% (w/w) aqueous solution of CARBOPOL 2984 (21.97g), and water (5.03g) and ethylenediaminetetraacetic acid (3.05g) were then added. The mixture was then shaken and left on rollers to ensure thorough mixing. Sodium hydroxide (3.05g) was then added to bring the pH of the system up to 6.29. This resulted in the CARBOPOL 2984 swelling.

### EXAMPLE 42

The rheological properties of the products of the foregoing Examples were measured on a Bohlin rheometer using a cup and bob or cone and plate geometry. The measurements were primarily carried out at a temperature of 25°C. Oscillation measurements were carried out within the linear viscoelastic region as determined by strain sweep measurements made at a frequency of 1Hz (6.28 rad/s).

The values for the moduli at 1 Hz are presented in TABLE I, where G* is the complex modulus; G' the storage modulus; G'' the loss modulus; δ the phase angle between the loss and storage moduli; and $\text{tan δ}$ is G''/G'.

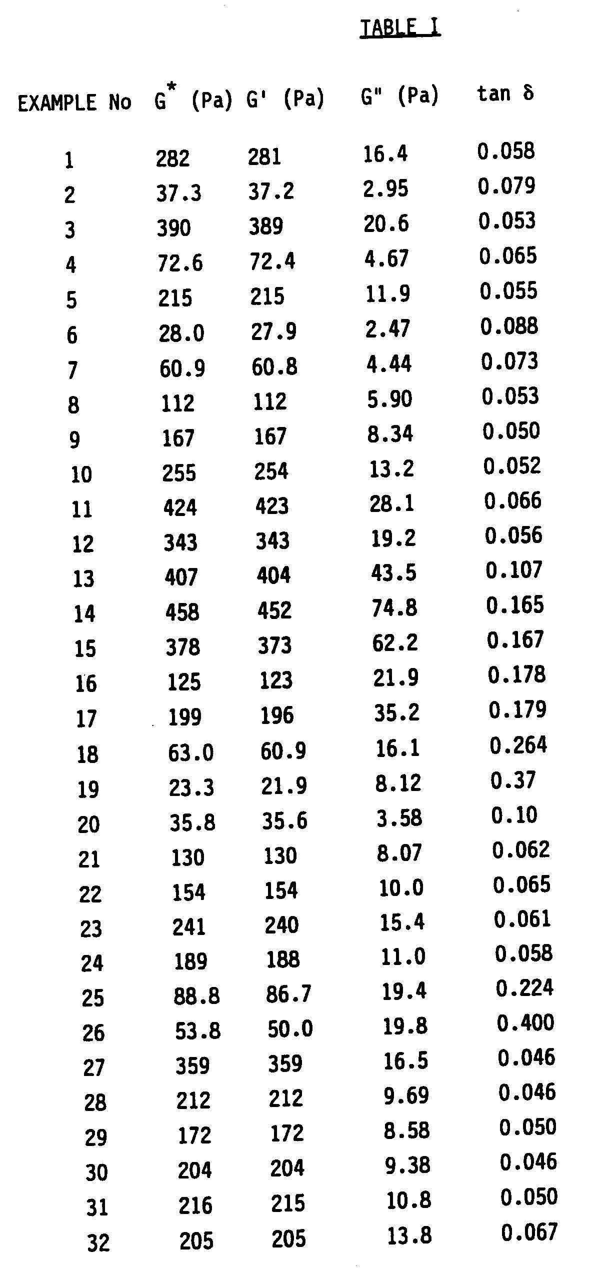

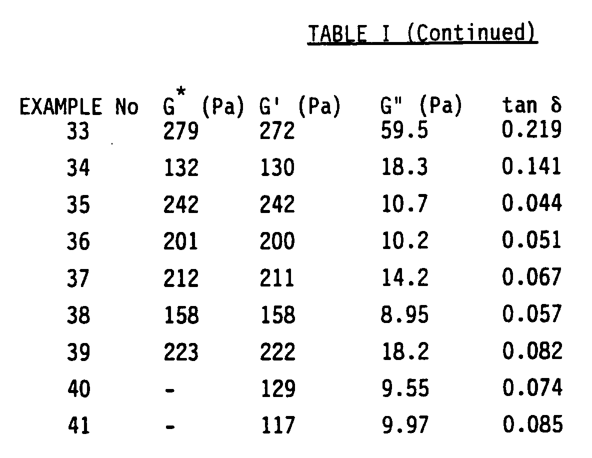

## Claims

1. A containerisation system comprising a water dispersible gel contained in a water-soluble or water dispersible bag; the water dispersible gel comprising:
(a) 1-60% by weight of a ionic, water-soluble agrochemical;
(b) 1-4% by weight of a crosslinked polyacrylic acid;
(c) 30-80% by weight of water; and,
(d) 2-20% by weight of a base.

2. A containerisation system as claimed in claim 1, wherein the pH of the gel is in the range 6 to 10.

3. A containerisation system as claimed in claim 1 or 2 wherein the crosslinked polyacrylic acid has a molecular weight in the rage 5x10⁵ to 5x10⁶.

4. A containerisation system as claimed in claim 1, 2 or 3 wherein the base is an ammonium or alkali metal hydroxide, carbonate or bicarbonate; or an amine of formula R¹R²R³N wherein R¹, R² and R³ are, independently, hydrogen or C₁₋₆ alkyl [optionally substituted by C₁₋₆ alkoxy, hydroxy, halogen, C₁₋₆ haloalkoxy, C₁₋₆ hydroxyalkoxy or C₁₋₄ alkoxy(C₁₋₆)alkoxy].

5. A containerisation system as claimed in claim 1, 2, 3 or 4 wherein the ionic, water-soluble agrochemical is a paraquat salt, a diquat salt, or a salt or ester of glyphosate.

6. A containerisation system as claimed in claim 1, 2, 3 or 4 wherein the ionic, water-soluble agrochemical is paraquat dichloride, diquat dibromide, glyphosate isopropylammonium or glyphosate trimesium.

## Patentansprüche

1. Containerisierungs-System, umfassend ein in einem wasserlöslichen oder wasserdispergierbaren Beutel enthaltenes wasserdispergierbares Gel, wobei das wasserdispergierbare Gel umfaßt:
(a) 1 bis 60 Gew.-% einer ionischen, wasserlöslichen Agrikulturchemikalie;
(b) 1 bis 4 Gew.-% einer vernetzten Polyacrylsäure;
(c) 30 bis 80 Gew.-% Wasser; und
(d) 2 bis 20 Gew.-% einer Base.

2. Containerisierungs-System gemäß Anspruch 1, worin der pH des Gels im Bereich von 6 bis 10 ist.

3. Containerisierungs-System gemäß Anspruch 1 oder 2, worin die vernetzte Polyacrylsäure ein Molekulargewicht im Bereich von 5 x 10⁵ bis 5 x 10⁶ hat.

4. Containerisierungs-System gemäß Anspruch 1, 2 oder 3, worin die Base ein Ammonium- oder Alkalimetallhydroxid, -carbonat oder -bicarbonat oder ein Amin der Formel R¹R²R³N ist, worin R¹, R² und R³ unabhängig Wasserstoff oder C₁₋₆-Alkyl [das gegebenenfalls mit C₁₋₆-Alkoxy, Hydroxy, Halogen, C₁₋₆-Halogenalkoxy, C₁₋₆-Hydroxyalkoxy oder C₁₋₄-Alkoxy-(C₁₋₆)-alkoxy substituiert ist] sind.

5. Containerisierungs-System gemäß Anspruch 1, 2, 3 oder 4, worin die ionische, wasserlösliche Agrikulturchemikalie eine Paraquatsalz, eine Diquatsalz oder ein Salz oder Ester von Glyphosat ist.

6. Containerisierungs-System gemäß Anspruch 1, 2, 3 oder 4, worin die ionische, wasserlösliche Agrikulturchemikalie Paraquatdichlorid, Diquatdibromid, Glyphosatisopropylammonium oder Glyphosattrimesium ist.

## Revendications

1. Système d'emballage contenant un gel dispersable dans l'eau contenu dans un sac hydrosoluble ou dispersable dans l'eau, comprenant :
(a) 1 à 60 % en poids d'un produit agrochimique ionique et hydrosoluble ;
(b) 1 à 4 % en poids d'un acide polyacrylique réticulé ;
(c) 30 à 80 % en poids d'eau ; et
(d) 2 à 20 % en poids d'une base.

2. Système d'emballage selon la revendication 1, dans lequel le pH du gel est compris entre 6 et 10.

3. Système d'emballage selon la revendication 1 ou la revendication 2, dans lequel l'acide polyacrylique réticulé a un poids moléculaire compris entre 5x10⁵ et 5x10⁶.

4. Système d'emballage selon les revendications 1, 2 ou 3, dans lequel la base est un hydroxyde d'ammonium ou de métal alcalin, un carbonate ou un bicarbonate ou une amine de formule R¹R²R³N dans laquelle R¹, R² et R³ sont indépendamment, un atome d'hydrogène ou un groupe alkyle C₁₋₆ [éventuellement substitué par des groupes alcoxy C₁₋₆, hydroxy, halogène, haloalcoxy C₁₋₆, hydroxyalcoxy C₁₋₆ ou alcoxy(C₁₋₄)alcoxy C₁₋₆].

5. Système d'emballage selon les revendications 1, 2, 3 ou 4, dans lequel le produit agrochimique ionique et hydrosoluble est un sel paraquat, un sel diquat ou un sel ou ester de glyphosate.

6. Système d'emballage selon les revendications 1, 2, 3 ou 4, dans lequel le produit agrochimique ionique et hydrosoluble est un dichlorure paraquat, un dibromure diquat, un glyphosate d'isopropylammonium ou un glyphosate de trimésium.
